# EUROPEAN PATENT SPECIFICATION

(11) **EP 2 153 554 B1**
(45) Date of publication and mention of the grant of the patent: **27.03.2013**
(21) Application number: 07729486.6
(22) Date of filing: 24.05.2007
(51) Int. Cl.: H04B 10/25

(54) **OPTICAL TRANSMITTER, OPTICAL NETWORK AND METHOD FOR COMPENSATION OF POLARISATION MODE DISPERSION**
OPTISCHER SENDER, OPTISCHES NETZWERK UND VERFAHREN ZUR KOMPENSATION DER POLARISATIONSMODENDISPERSION
ÉMETTEUR OPTIQUE, RÉSEAU OPTIQUE ET PROCÉDÉ DE COMPENSATION DE DISPERSION DE MODE DE POLARISATION

(43) Date of publication of application: 17.02.2010
(73) Proprietor: Telefonaktiebolaget LM Ericsson (publ), 164 83 Stockholm (SE)
(72) Inventor: CIARAMELLA, Ernesto, 56017 San Giuliano Terme (PI) (IT); MATARAZZO, Emma, I-83100 Avellion (IT)
(74) Representative: Stasiewski, Piotr Grzegorz
(86) International application number: PCT/EP2007/055057
(87) International publication number: WO 2008/141678

(56) References cited:
- EP-A- 0 984 571
- GB-A- 2 307 368
- US-B1- 6 459 830

## Description

### Field of the Invention

The present invention relates to optical communications networks, in general, and in particular to compensation of polarisation mode dispersion.

### Background of the Invention

Polarization Mode Dispersion (PMD) of transmission fibres is likely the most limiting effect for deploying high-speed optical communications systems at 40 Gbit/s per channel and above. PMD arises from random birefringence in fibres and network devices, which gives rise to a differential group delay (DGD) between the two principal states of polarization (PSPs), and manifests as random pulse distortion and performance degradation in optical fibre transmission systems. PMD is a stochastic phenomenon whose DGD value changes with time, temperature, wavelength and deployment condition.

In an ideal situation, light with different polarisations travels at the same speed in a waveguide (optical fibre). Due to random imperfections and asymmetries that cause random spreading of optical pulses, which are present in real life optical fibre two different polarisations of light travel across the waveguide with different speeds and this phenomenon is called Polarisation Mode Dispersion.

To mitigate the effect of PMD, optical systems must include some form of PMD compensation. In Wavelength Division Multiplex (WDM) systems normally one such compensator for each channel must be employed to achieve satisfactory performance. To effectively mitigate the PMD effects the temporal drift of the PMD characteristics forces any active compensation technique to dynamically adapt while the system is in operation and the fibre PMD evolves. A number of optical and electronic PMD compensators were proposed. Among them the solutions in the electrical domain are generally faster and more flexible, but they are intrinsically limited to low PMD. Therefore, the optical PMD compensators, which are much more complex, have larger potential as the PMD (at least in theory) can be completely compensated in the optical domain.

The basic blocks of a typical PMD compensator are a number of high-birefringence elements (e.g. Polarization Maintaining Fibres, PMF, elements), a feedback signal and an optimization algorithm that dynamically drives the PMDC.

A disadvantage of the solutions known in the art is that the effectiveness of PMD-Compensators (PMDCs) is often estimated through a static or quasi-static procedure: since the penalty depends on both input signal State Of Polarization (SOP) and the fibre PMD, one can use a PMD-emulator and fix the input signal SOP to measure the effectiveness of the PMDC. Then either SOP or PMD are changed and the PMDC optimized again (this corresponds, at the theoretical level, to the outage probability approach). In both cases, one neglects what may happen during transients from one operating condition to the next one. In principle, any change of the input state of polarization (SOP) and/or of the fibre PMD corresponds to a time-depend trajectory of the PMDC variable parameters. Therefore this quasi-static approach might be correct only if these trajectories had no discontinuity. This has been proven not true.

Most Polarization Mode Dispersion Compensators can use one out of two different compensation strategies. As system impairments only depend on |Ω̅*xs̅*|, where *̅s̅*̅ and Ω̅ are the Stokes vectors of the signal SOP and overall 1*^{st}* order PMD, respectively. Hence a PMDC works effectively if either Ω̅ is parallel to *̅s̅*̅ or if |Ω̅| is simply minimised. If the PMDC starts in the "parallel" mode, after some time, the PMDC may have to instantaneously switch to the "minimization" mode.

Since there is a nonzero time needed for switching the PMDC and then iteratively finding the new optimum operation point, during this time windows, the PMDC may produce eye closure and error bursts, which cannot be tolerated by system and network architectures.

From the PMDC it is therefore mandatory that it cannot ever use the "parallel" strategy. However this cannot be simply avoided: the signal characteristics do not allow separating these two operation modes. Thus the usual feedback signals provide basically the same results in the two modes and it cannot be implemented any different type of feedback to discriminate the two modes. Therefore, today an optical PMDC suffers from locking to unstable condition, then producing ineffective compensation later on, with low signal quality and even unacceptable error bursts.

It is known in the art a technique known as polarization scrambling, which is currently used in long-haul optical transmission systems.

There is known a document disclosing a dithering unit in an optical transmitter, namely EP0984571A2. In another document, GB2307368A, polarization scrambling is disclosed and in yet another prior document, US6459830B1 compensation of polarization mode dispersion using polarization scrambling is disclosed. However operations as in the invention now to be described are neither disclosed nor suggested in these prior documents.

Hence, an improved apparatus and method for compensation of polarisation mode dispersion would be advantageous and in particular one that is easy applicable to compensation of a broad range of PMD (including high polarisation mode dispersion) as well as to situations with variable state of polarisation.

### Summary of the Invention

Accordingly, the invention seeks to preferably mitigate, alleviate or eliminate one or more of the disadvantages mentioned above singly or in any combination.

According to a first aspect of the present invention there is provided an optical transmitter apparatus for use in optical communications network comprising a polarisation dithering unit connected in series between an output of an optical transmitter unit and an output to a transmission fibre. The polarization dithering unit is adapted to introduce polarization variation to stabilise operation of a Polarisation Mode Dispersion Compensator operating at a receiver end of the transmission fibre. The polarization dithering unit is also adapted to modulate state of polarization of an input signal, so that said state of polarization modulation changes on a time-scale shorter than the time-scale over which a feedback signal of the Polarisation Mode Dispersion Compensator is extracted

According to a second aspect of the present invention there is provided an optical communications network comprising at least a transmitter apparatus and a receiving apparatus, wherein the transmitter apparatus comprises a polarisation dithering unit connected in series between an output of an optical transmitter unit and a transmission fibre, the network further comprises a Polarisation Mode Dispersion Compensator connected between the end of the transmission fibre and an input of the receiving apparatus. The Polarisation Mode Dispersion Compensator comprises a Polarisation Controller, a delay unit and a feedback signal line that is adapted to provide to the Polarisation Controller a feedback signal taken at the receiver apparatus input. The dithering unit is adapted to modulate state of polarization of an input signal, so that said state of polarization modulation changes on a time-scale shorter than the time-scale over which the feedback signal of the Polarisation Mode Dispersion Compensator is extracted.

According to a third aspect of the present invention there is provided a method of transmitting optical signal in an optical communications network comprising polarisation dithering of the optical signal transmitted from a an output of an optical transmitter unit and sending said dithered signal to a transmission fibre. The method also comprises compensating said dithered signal for polarization mode dispersion in a Polarization Mode Dispersion Compensator. The dithering modulates state of polarization of an input signal so that the state of polarization modulation changes on a time-scale shorter than the time-scale over which a feedback signal of the Polarisation Mode Dispersion Compensator is extracted.

Further features of the present invention are as claimed in the dependent claims.

The present invention beneficially allows for suppressing instabilities at the PMDC without introducing significant jitter. This solution makes PMDC really effective, by suppressing the PMDC intrinsic instabilities. Additionally it can be implemented cost effectively by simple modifications of the transmitter.

### Brief description of the drawings

The present invention will be understood and appreciated more fully from the following detailed description taken in conjunction with the drawings in which:
FIG. 1 is a diagram illustrating an optical communications network in one embodiment of the present invention;
FIG. 2 is a diagram illustrating a Polarization Mode Dispersion Compensator for use in an optical communications network in one embodiment of the present invention;
FIG. 3 is a diagram illustrating an example of variations of the input of the transmission Stokes vector on Poincaré sphere (dotted line);
FIG. 4A is a diagram illustrating eye closure evolution in dB in the case of a prior art solution;
FIG. 4B is a diagram illustrating eye closure evolution in dB in one embodiment of the present invention;
FIG. 5 is a flowchart illustrating a method of transmitting optical signal in one embodiment of the present invention.

### Description of embodiments of the invention

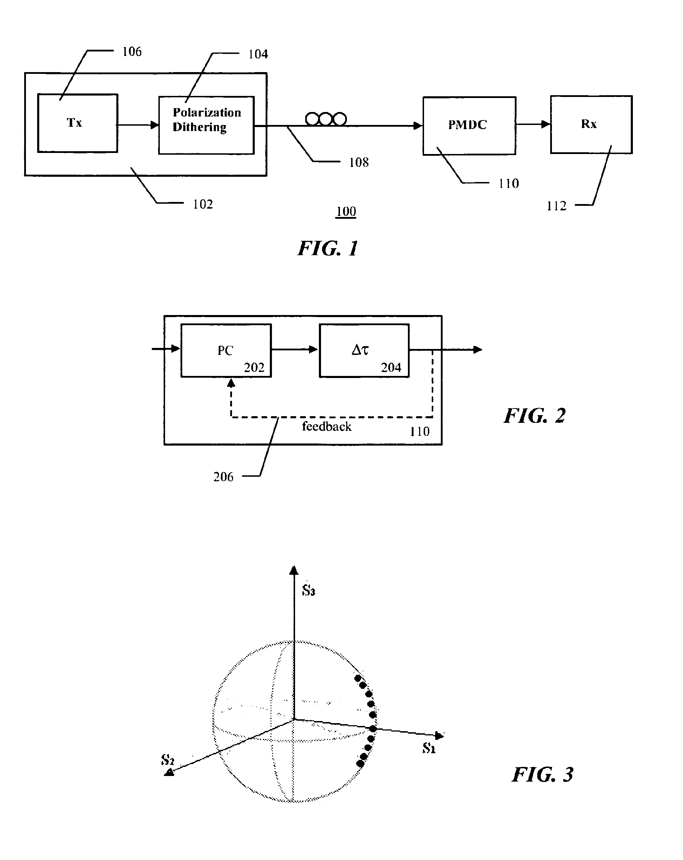

With reference to FIG. 1 an optical transmitter apparatus 102 for use in optical communications network 100 is presented. For the sake of clarity the drawings present the invention in a very schematic way with elements and lines not essential for understanding the invention omitted.

The term "transmitter" or "transmitter apparatus" used in this application relates to devices that launch optical signal to the network and covers for example optical transmitters, optical amplifiers and optical add/drop nodes.

The transmitter apparatus 102 comprises a polarisation dithering unit 104 connected in series between an output of an optical transmitter unit 106 and a transmission fibre 108. The transmitter unit 106 and the dithering unit 104 have to be optically connected, however the length of the optical fibre between them is negligible compared to the length of the transmission fibre 108. Note that in WDM systems it is possible to use one dithering unit for each channel or preferably only one dithering unit for all the channels that is located after a WDM multiplexer (not shown). It is, however, within contemplation of the present invention that for communications network transmitting more than one channel along the transmission fibre 108 there is one dithering unit per channel in the transmitter apparatus 102, but not necessarily all channels are polarisation dithered. This may, for example apply to a control channel that does not require a significant bandwidth and it is not essential to achieve high data rates on it. Same is applicable to the embodiment with the multiplexer where not all channels are multiplexed and not all are in consequence polarisation dithered.

The location of the dithering unit close to the transmitter unit 106 provides important benefits. Polarization dithering is a modulation of initial State Of Polarisation (SOP), therefore it operates properly if dithering unit is applied to the signal before launching into the fibre. If the dithering unit is located at the RX side, it doesn't work (we have 50% of probability that the compensator works in parallel mode and 50% of probability that it works in minimization mode). If the dithering unit is located in the middle of the link, its effectiveness is reduced.

With reference to FIG. 1 an optical transmitter apparatus 102 for use in an optical communications network 100 is presented. The network 100 comprises a transmitter apparatus 102 and a receiving apparatus 112. The transmitter apparatus 102 comprises a polarisation dithering unit 104 connected in series between an output of an optical transmitter unit 106 and a transmission fibre 108. The addition of the dithering unit 102 helps mitigating the effect of Polarization Mode Dispersion (PMD) of transmission fibre linking the optical transmitter 102 and the optical receiver 112 apparatuses because the network 100 further comprises a Polarisation Mode Dispersion Compensator (PMDC) 110 connected between the end of the transmission fibre 108 and an input of the receiving apparatus 112.

In a preferred embodiment the PMDC 110 comprises a Polarisation Controller 202, a delay unit 204 and a feedback signal line 206. The delay unit 204 provides, preferably, a fixed delay Δτ between two orthogonal SOP. The feedback signal line 206 provides a feedback signal extracted at the receiver apparatus 112 input to the Polarisation Controller 202. PMDC 110, and specifically the Polarisation Controller 202, at the receiver side compensates for the Polarization Mode Dispersion of the transmission fibre based on the received feedback signal. In a preferred embodiment the feedback signal is an eye opening signal or pre-FEC Bit error ratio or the intensity of a part of the electrical spectrum of the detected signal.

In order to stabilize the Polarization Mode Dispersion Compensator, which in the prior art suffers from locking to unstable condition (i.e. situation when the PMDC starts in the "parallel" mode, after some time instantaneously switches to the "minimization" mode) the transmission system is modified by introduction of a polarization dithering unit 104 between the transmitter 106 and the transmission fibre 108. When the Stokes vector of the signal's State Of Polarisation varies with time, this can be viewed as a trajectory on the Poincaré sphere as illustrated in FIG. 3. The Poincaré sphere provides a convenient way of representing polarized light and predicting how any given retarder will change the polarization form. The upper and lower poles represent left and right-circularly polarized light. Points on the equator indicate linear polarization. Other points on the sphere represent elliptical polarization. An arbitrarily chosen point H on the equator designates horizontal polarization, and the diametrically opposite point V designates vertical polarization. A general point P on the surface of the (unit radius) Poincarè sphere is specific in terms of the longitude and the latitude.

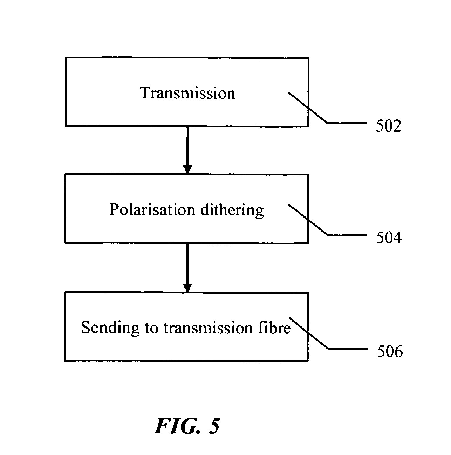

The inventors carried out computer simulations to determine effectiveness of this approach. It these simulations a 40 Gbit/s nonreturn-to-zero (NRZ) signal with no chirp, propagating along a fibre with an average differential group delay DGD =8.0 ps *(≈ T_{bit}*/3) was assumed, where *T_{bit}* is bit time. Additionally, in order to speed the simulation, it was assumed that a 64-bit pattern is propagated along the fiber, using the wave-plate model. Before launching to the transmission fibre, signal passes through a dithering block 104. The dithering block 104 introduces a variation of the signal's State Of Polarisation (SOP) that is given by an arc of a circle in the Stokes domain, as shown in FIG 3. With the polarization dithering the variation of initial SOP is limited only to said arc of a circle, and the signal is not fully depolarized. It could be expected that a complete polarization scrambler prevents the dynamic limitations of PMDCs. The inventors found, however, that this also produces a relevant jitter, which cannot be tolerated in a real system (FIG. 5A). However, a low, controlled polarization variation can be enough to suppress the PMDC instabilities, whilst introducing no significant jitter.

In one embodiment, at the receiver end, the PMDC 110 is a one-stage Polarization Mode Dispersion Compensator with fixed delay provided by a delay unit 204 and a Polarization Controller 202, i.e. it has two degrees of freedom. The receiver is modelled as a fast photodiode followed by low-pass Bessel filter (4^{th} order, 28 GHz bandwidth). As the feedback signal the eye opening signal is used. Neither electrical nor optical noise is added; hence the eye opening is a preferred feedback signal.

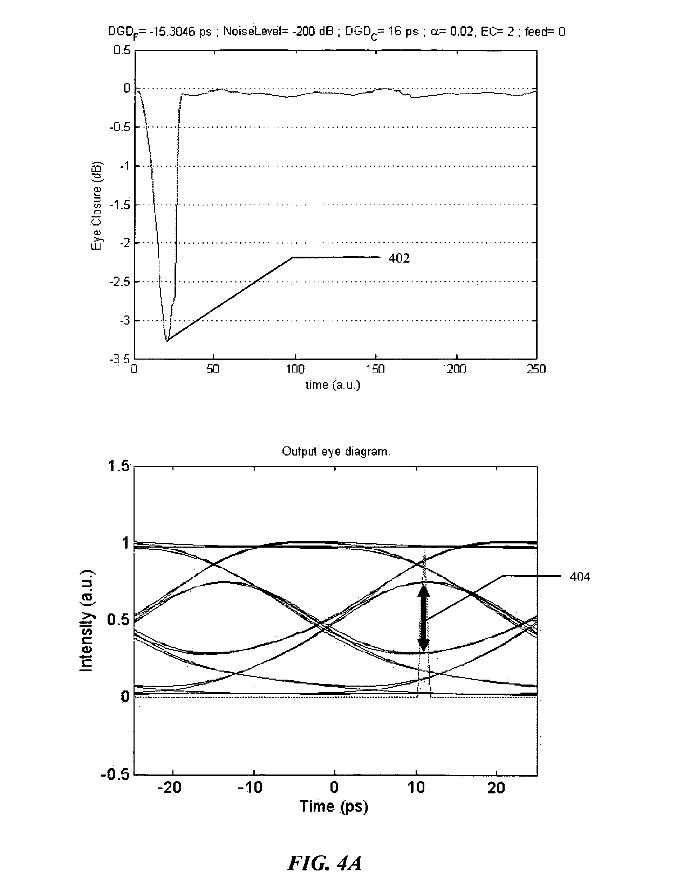

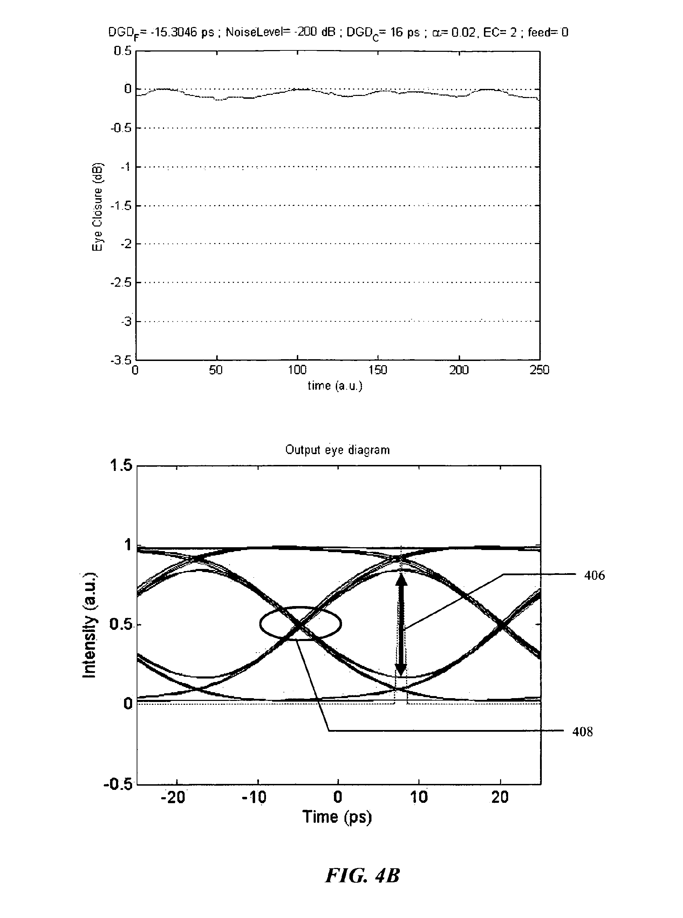

Figures 4A and 4B show two examples of curves, obtained without (FIG. 4A) and with (FIG. 4B) polarisation dithering and with DGD_{f}= 15.3ps and DGD_{c}=16ps, and input state of polarisation was close to one principal state of polarisation. Where DGD_{f} stands for differential group delay of the fibre and DGD_{c} stands for differential group delay of the PDMC. The differential group delay of the PDMC is introduced by the delay unit 204.

In FIG. 4A, in the top diagram, eye closure evolution in dB in the case of a prior art transmitter is illustrated, i.e. an optical transmitter with no polarization dithering. Here, after initial locking, the eye suddenly suffers from a significant penalty of about 3.5 dB, 402. In the bottom diagram the corresponding eye diagram is shown. The penalty of 3.5 dB results in closing the eye, 404, and indicates dynamic limitations of the PMDCs. Even worse results are obtained when, due to the statistical variations, the fibre reaches higher DGD_{f} values.

When polarisation dithering (also referred to as arc dithering) is introduced, the eye diagram is not affected by the penalty - this is illustrated in FIG. 4B top diagram and 406 on the bottom diagram. On the other hand, a presence of limited jitter, 408, is noticed. Ideally the sampling instants would always occur at the centre of a data bit time, equidistant between two adjacent edge transition points. Jitter however changes the edge positions with respect to the sampling point and can affect the performance of the opto-electronic high speed receivers.

It can be seen that, when the signal is not polarization-dithered, the time delay it takes to travel through a PMD-affected fibre depends on the fibre DGD_{f} and its initial SOP. As an example, if the signal is first injected with its SOP along one of the principal states of polarization (PSP) of the fibre and then along the other PSP, it has two different values of the group delay whose difference is the DGD_{f}. Changes of input SOP, coupled with PMD, can thus produce a non-constant arrival time of the digital symbols.

It is emphasized that choosing the speed of the polarization dithering determines this delay-modulation, and this is very critical. If the dithering is slow, the SOP changes are slow (e.g. kHz), and a typical receiver would not be affected significantly by the different group delay. However, in that case, the benefit onto the PMDC would disappear: to be effective, polarization dithering should change input SOP at a faster speed than the speed of the electronics that is implemented to extract a feedback signal (MHz or higher). Therefore in a preferred embodiment a fast polarization dithering is used. In this case, however the polarization dithering combines with the residual PMD (the part of the fibre PMD that is not compensated by the PMDC), and produces jitter. This jitter can dramatically affect the receiver performance, by closing the eye diagram and not allowing the clock recovery to extract a good clock signal from the data. The inventors found that an arc dithering of around 1 rad in the Stokes sphere is able to suppress the instability of a one stage PMDC in all tested cases and at the same time it produces a negligible increase of time jitter even in cases when the DGD of the fibre (DGD_{f}) is quite different than that of the PMDC (DGD_{c}). This shows the advantage of the present solution, which can handle DGD value that changes with time, temperature, wavelength and deployment condition.

With reference to FIG. 5 one embodiment of a method of transmitting optical signal in an optical communications network (100) is presented. The method comprises a step of polarisation dithering 504 of the optical signal output 502 from the optical transmitter unit 106. In the next step the dithered signal is sent 506 to the transmission fibre.

In one embodiment, for communications network transmitting more than one channel along the transmission fibre 108, the step of polarisation dithering 504 is performed on individual channels. In this embodiment all the channels transmitted along the fibre are individually dithered or, alternatively, only part of these channels is polarisation dithered.

In yet another embodiment, for communications network transmitting more than one channel along the transmission fibre 108, the method comprises a step of multiplexing the channels followed by the step of polarisation dithering 504 of the multiplexed signal. Again, two alternative implementations are possible. In one implementation all channels are multiplexed and then polarisation dithering is performed on them or, alternatively, only part of the channels to be transmitted along the fibre is multiplexed and then polarisation dithered.

The invention is preferably applicable to Wavelength Division Multiplexing (WDM), Dense Wavelength Division Multiplexing (DWDM) or Coarse Wave Division Multiplexing (CWDM) systems, but it can also be used in other optical systems providing high-speed communication including single channel systems.

## Claims

1. An optical transmitter apparatus (102) for use in an optical communications network comprising a polarisation dithering unit (104) connected in series between an output of an optical transmitter unit (106) and an output to a transmission fibre (108), wherein the polarization dithering unit (104) is adapted to introduce polarization variation to stabilise operation of a Polarisation Mode Dispersion Compensator (110) operating at a receiver end of the transmission fibre (108), and adapted to modulate state of polarization of an input signal, so that said state of polarization modulation changes on a time-scale shorter than the time-scale over which a feedback signal of the Polarisation Mode Dispersion Compensator (110) is extracted.

2. The optical transmitter apparatus (102) according to claim 1, wherein for communications network transmitting more than one channel along the transmission fibre (108), the transmitter apparatus (102) comprises one dithering unit per channel.

3. The optical transmitter apparatus (102) according to claim 1, wherein for communications network transmitting more than one channel along the transmission fibre (108), the transmitter apparatus (102) comprises a multiplexer connected to the optical transmitter unit (106) and the dithering unit (104) is connected to an output of said multiplexer.

4. An optical communications network (100) comprising at least a transmitter apparatus (102) and a receiving apparatus (112), wherein the transmitter apparatus (102) comprises a polarisation dithering unit (104) connected in series between an output of an optical transmitter unit (106) and a transmission fibre (108), the network (100) further comprises a Polarisation Mode Dispersion Compensator (110) connected between the end of the transmission fibre (108) and an input of the receiving apparatus (112), wherein the Polarisation Mode Dispersion Compensator (110) comprises a Polarisation Controller (202), a delay unit (204) and a feedback signal line (206) that is adapted to provide to the Polarisation Controller (202) a feedback signal taken at the receiver apparatus (112) input and wherein the dithering unit (104) is adapted to modulate state of polarization of an input signal, so that said state of polarization modulation changes on a time-scale shorter than the time-scale over which the feedback signal of the Polarisation Mode Dispersion Compensator (110) is extracted.

5. The network (100) according to claim 4, wherein the feedback signal is an eye opening signal or pre-FEC Bit error ratio.

6. The network (100) according to claim 4 or 5, wherein the delay unit (204) is adapted to add a fixed delay to the optical signal.

7. The network (100) according to any one of claims 4-6, wherein if the network (100) transmits more than one channel along the transmission fibre (108) the transmitter apparatus (102) comprises one dithering unit per channel.

8. The network (100) according to any one of claims 4-6, wherein if the network (100) transmits more than one channel along the transmission fibre (108) the transmitter apparatus (102) comprises a multiplexer connected to the optical transmitter unit (106) and the dithering unit (104) is connected to an output of said multiplexer.

9. The network (100) according to any one of claims 4-8, wherein said network is a Wavelength Division Multiplex or Dense Wavelength Division Multiplex, or Coarse Wavelength Division Multiplex.

10. A method of transmitting optical signal in an optical communications network (100) comprising polarisation dithering (504) of the optical signal transmitted (502) from a an output of an optical transmitter unit (106) and sending (506) said dithered signal to a transmission fibre (108), and compensating said dithered signal for polarization mode dispersion in a Polarization Mode Dispersion Compensator (110), wherein the dithering modulates state of polarization of an input signal so that the state of polarization modulation changes on a time-scale shorter than the time-scale over which a feedback signal of the Polarisation Mode Dispersion Compensator (110) is extracted.

11. The method according to claim 10, wherein for communications network transmitting more than one channel along the transmission fibre (108) the step of polarisation dithering (504) is performed on individual channels.

12. The method according to claim 10, wherein for communications network transmitting more than one channel along the transmission fibre (108) the method comprises multiplexing the channels followed by the step of polarisation dithering (504) of the multiplexed signal.

## Patentansprüche

1. Optische Sendervorrichtung (102) zur Verwendung in einem optischen Kommunikationsnetz, umfassend eine Polarisationsdithering-Einheit (104), die zwischen einen Ausgang einer optischen Sendereinheit (106) und einen Ausgang zu einer Übertragungsfaser (108) in Reihe geschaltet ist, wobei die Polarisationsdithering-Einheit (104) so ausgelegt ist, dass sie Polarisationsänderung einführt, um den Betrieb eines Polarisationsmoden-Dispersionskompensators (110) zu stabilisieren, der an einer Empfängerseite der Übertragungsfaser (108) arbeitet, und so ausgelegt ist, dass sie den Polarisationszustand eines Eingangssignals so ändert, dass sich der Polarisationsmodulationszustand auf einer Zeitskala ändert, die kürzer als die Zeitskala ist, über welche ein Rückführungssignal des Polarisationsmoden-Dispersionskompensator (110) extrahiert wird.

2. Optische Sendervorrichtung (102) nach Anspruch 1, wobei für ein Kommunikationsnetz, das mehr als einen Kanal auf der Übertragungsfaser (108) überträgt, die Sendervorrichtung (102) eine Dithering-Einheit pro Kanal umfasst.

3. Optische Sendervorrichtung (102) nach Anspruch 1, wobei für ein Kommunikationsnetz, das mehr als einen Kanal auf der Übertragungsfaser (108) überträgt, die Sendervorrichtung (102) einen Multiplexer umfasst, der mit der optischen Sendereinheit (106) verbunden ist, und die Dithering-Einheit (104) mit einem Ausgang des Multiplexers verbunden ist.

4. Optisches Kommunikationsnetz (100), umfassend mindestens eine Sendervorrichtung (102) und eine Empfangsvorrichtung (112), wobei die Sendervorrichtung (102) eine Polarisationsdithering-Einheit (104) umfasst, die zwischen einen Ausgang einer optischen Sendereinheit (106) und eine Übertragungsfaser (108) in Reihe geschaltet ist, wobei das Netz (100) ferner einen Polarisationsmoden-Dispersionskompensator (110) umfasst, der zwischen das Ende der Übertragungsfaser (108) und einen Ausgang der Empfangsvorrichtung (112) geschaltet ist, wobei der Polarisationsmoden-Dispersionskompensator (110) eine Polarisationssteuerung (202), eine Verzögerungseinheit (204) und eine Rückführungssignalleitung (206) umfasst, die so ausgelegt ist, dass sie ein Rückführungssignal, das am Eingang der Empfangsvorrichtung (112) entnommen wird, an die Polarisationssteuerung (202) liefert, und wobei die Dithering-Einheit (104) so ausgelegt ist, dass sie den Polarisationszustand eines Eingangssignals so moduliert, dass sich der Polarisationsmodulationszustand auf einer Zeitskala ändert, die kürzer als die Zeitskala ist, über welche das Rückführungssignal des Polarisationsmoden-Dispersionskompensators (110) extrahiert wird.

5. Netz (100) nach Anspruch 4, wobei das Rückführungssignal ein Augenöffnungssignal oder Prä-FEC-Bitfehlerverhältnis ist.

6. Netz (100) nach Anspruch 4 oder 5, wobei die Verzögerungseinheit (204) so ausgelegt ist, dass sie dem optischen Signal eine feste Verzögerung hinzufügt.

7. Netz (100) nach einem der Ansprüche 4 bis 6, wobei, wenn das Netz (100) mehr als einen Kanal auf der Übertragungsfaser (108) überträgt, die Sendervorrichtung (102) eine Dithering-Einheit pro Kanal umfasst.

8. Netz (100) nach einem der Ansprüche 4 bis 6, wobei, wenn das Netz (100) mehr als einen Kanal auf der Übertragungsfaser (108) überträgt, die Sendervorrichtung (102) einen Multiplexer umfasst, der mit der optischen Sendereinheit (106) verbunden ist, und die Dithering-Einheit (104) mit einem Ausgang des Multiplexers verbunden ist.

9. Netz (100) nach einem der Ansprüche 4 bis 8, wobei das Netz ein Wellenlängenmultiplex- oder ein Dicht-Wellenlängenmultiplex- oder ein Grob-Wellenlängenmultiplexnetz ist.

10. Verfahren zur Übertragung eines optischen Signals in einem optischen Kommunikationsnetz (100), umfassend ein Polarisationsdithern (504) des optischen Signals, das von einem Ausgang einer optischen Sendereinheit (106) gesendet wird (502), und Senden (506) des geditherten Signals an eine Übertragungsfaser (108), und Kompensieren des geditherten Signals für Polarisationsmoden-Dispersion (110), wobei das Dithern den Polarisationszustand eines Eingangssignals so ändert, dass sich der Polarisationsmodulationszustand auf einer Zeitskala ändert, die kürzer als die Zeitskala ist, über welche ein Rückführungssignal des Polarisationsmoden-Dispersionskompensators (110) extrahiert wird.

11. Verfahren nach Anspruch 10, wobei für ein Kommunikationsnetz, das mehr als einen Kanal auf der Übertragungsfaser (108) überträgt, der Schritt des Polarisationsditherns (504) auf einzelnen Kanälen ausgeführt wird.

12. Verfahren nach Anspruch 10, wobei für ein Kommunikationsnetz, das mehr als einen Kanal auf der Übertragungsfaser (108) überträgt, das Verfahren ein Multiplexen der Kanäle gefolgt durch den Schritt des Polarisationsditherns (504) der gemultiplexten Kanäle umfasst.

## Revendications

1. Dispositif d'émetteur optique (102) à utiliser dans un réseau de communication optique comprenant une unité de juxtaposition de polarisation (104) connectée en série entre une sortie d'une unité d'émetteur optique (106) et une sortie vers une fibre de transmission (108), dans lequel l'unité de juxtaposition de polarisation (104) est adaptée pour introduire une variation de polarisation afin de stabiliser le fonctionnement d'un compensateur de dispersion de mode de polarisation (110) fonctionnant à une extrémité de récepteur de la fibre de transmission (108), et adaptée pour moduler un état de polarisation d'un signal d'entrée, de sorte que ledit état de modulation de polarisation varie sur une échelle temporelle plus courte que l'échelle temporelle sur laquelle un signal de retour d'information du compensateur de dispersion de mode de polarisation (110) est extrait.

2. Dispositif d'émetteur optique (102) selon la revendication 1, dans lequel pour un réseau de communication émettant plus d'un canal le long de la fibre de transmission (108), le dispositif émetteur (102) comprend une unité de juxtaposition de par canal.

3. Dispositif d'émetteur optique (102) selon la revendication 1, dans lequel pour un réseau de communication émettant plus d'un canal le long de la fibre de transmission (108), le dispositif émetteur (102) comprend un multiplexeur connecté à l'unité d'émetteur optique (106) et l'unité de juxtaposition (104) est connectée à une sortie dudit multiplexeur.

4. Réseau de communication optique (100) comprenant au moins un dispositif émetteur (102) et un dispositif récepteur (112), dans lequel le dispositif émetteur (102) comprend une unité de juxtaposition de polarisation (104) connectée en série entre une sortie d'un unité d'émetteur optique (106) et une fibre de transmission (108), le réseau (100) comprend en outre un compensateur de dispersion de mode de polarisation (110) connecté entre l'extrémité de la fibre de transmission (108) et une entrée du dispositif récepteur (112), dans lequel le compensateur de dispersion de mode de polarisation (110) comprend un contrôleur de polarisation (202), une unité de retard (204) et une ligne de signal de retour d'information (206) qui est adaptée pour fournir au contrôleur de polarisation (202) un signal de retour d'information prélevé au niveau de l'entrée du dispositif récepteur (112) et dans lequel l'unité de juxtaposition (104) est adaptée pour moduler l'état de polarisation d'un signal d'entrée, de sorte que ledit état de modulation de polarisation varie sur une échelle temporelle plus courte que l'échelle temporelle sur laquelle le signal de retour d'information du compensateur de dispersion de mode de polarisation (110) est extrait.

5. Réseau (100) selon la revendication 4, dans lequel le signal de retour d'information est un signal d'ouverture d'oeil ou un rapport d'erreur binaire pré-FEC.

6. Réseau (100) selon les revendications 4 ou 5, dans lequel l'unité de retard (204) est adaptée pour ajouter un retard fixe au signal optique.

7. Réseau (100) selon une quelconque des revendications 4-6, dans lequel su le réseau (100) émet plus d'un canal le long de la fibre de transmission (108) le dispositif émetteur (102) comprend une unité de juxtaposition par canal.

8. Réseau (100) selon une quelconque des revendications 4-6, dans lequel si le réseau (100) émet plus d'un canal le long de la fibre de transmission (108) le dispositif émetteur (102) comprend un multiplexeur connecté à l'unité d'émetteur optique (106) et l'unité de juxtaposition (104) est connectée à une sortie dudit multiplexeur.

9. Réseau (100) selon une quelconque des revendications 4-8, dans lequel ledit réseau est un multiplexage par répartition de longueur d'onde, ou multiplexage par répartition dense en longueur d'onde, ou multiplexage par répartition espacée en longueur d'onde.

10. Procédé d'émission de signaux optiques dans un réseau de communication optique (100) comprenant une juxtaposition de polarisation (504) du signal optique émis (502) depuis une sortie d'une unité d'émetteur optique (106) et envoyer (506) ledit signal juxtaposé à une fibre de transmission (108), et compenser ledit signal juxtaposé pour une dispersion de mode de polarisation dans un compensateur de dispersion de mode de polarisation (110), dans lequel la juxtaposition module l'état de polarisation d'un signal d'entrée de sorte que l'état de modulation de polarisation varie sur une échelle temporelle plus courte que l'échelle temporelle sur laquelle un signal de retour d'information du compensateur de dispersion de mode de polarisation (110) est extrait.

11. Procédé selon la revendication 10, dans lequel pour un réseau de communication émettant plus d'un canal le long de la fibre de transmission (108) l'étape de juxtaposition de polarisation (504) est mise en oeuvre sur des canaux individuels.

12. Procédé selon la revendication 10, dans lequel pour un réseau de communication émettant plus d'un canal le long de la fibre de transmission (108) le procédé comprend de multiplexer les canaux suivi par l'étape de juxtaposition de polarisation (504) du signal multiplexé.
